Europäisches Patentamt

European Patent Office

Office européen des brevets

(11) Veröffentlichungsnummer: **0 379 612**
**A1**

(12) **EUROPÄISCHE PATENTANMELDUNG**

(21) Anmeldenummer: **89101205.6**

(22) Anmeldetag: **24.01.89**

(51) Int. Cl.⁵: **F16H 25/20, F16K 31/04**

(43) Veröffentlichungstag der Anmeldung:
**01.08.90 Patentblatt 90/31**

(84) Benannte Vertragsstaaten:
**AT DE ES GB IT**

(71) Anmelder: **Siemens Aktiengesellschaft**
**Wittelsbacherplatz 2**
**D-8000 München 2(DE)**

(72) Erfinder: **Ziem, Hans-Joachim, Dipl.-Ing. (FH)**
**Karl-Plesch-Strasse 70**
**D-8501 Schwanstetten(DE)**

(54) **Elektromotorischer Stellantrieb.**

(57) Die Erfindung betrifft einen elektromotorischen Stellantrieb, mit Selbsthemmung oder Selbsthaltung, der eine mit einem Verstellglied kuppelbare und in ihrer Verstellbewegung in beiden Richtungen durch Anschläge (15,16 bzw .20,21) begrenzte Verstellspindel (8) aufweist, die über ein Getriebe (3,5) von einem Elektromotor antreibbar ist, wobei das Abtriebsrad (5) des Getriebes als Spindelmutter dient, die mittels ihres Innengewindes (6) auf die mit einem entsprechenden Außengewinde (7) versehene Verstellspindel (8) aufgeschraubt ist, welches Abtriebsrad (5) ferner eine Außenverzahnung aufweist, die gegenüber dem antreibenden Getrieberad (3) des Getriebes eine axiale Verschiebung des Abtriebsrades (5) in der Achsrichtung der Verstellspindel (8) zuläßt, wobei das Abtriebsrad (5) in dieser Achsrichtung federnd im Gehäuse (1,2) des Stellantriebes abgestützt ist. Ein solcher Stellantrieb kann unabhängig von der jeweils von der Verstellspindel auszuführenden Verstellbewegung mit der gleichen Antriebseinheit versehen werden.

FIG 1

EP 0 379 612 A1

## Elektromotorischer Stellantrieb

Die Erfindung betrifft einen elektromotorischen Stellantrieb. Derartige Stellantriebe werden für die Fernbetätigung von verstellbaren Steuergliedern, wie Klappen oder Ventile verwendet. Je nach Art der Steuerglieder ist für deren Verstellung eine Drehbewegung oder eine Schubbewegung notwendig.

Der Erfindung liegt die Aufgabe zugrunde, einen Stellantrieb zu schaffen, bei dem unabhängig von der durch die Verstellspindel auszuführenden Verstellbewegung (Dreh- oder Schubbewegung) der gleiche Antriebsteil verwendet werden kann.

Die Lösung dieser Aufgabe gelingt mit einem im Anspruch 1 beschriebenen elektromotorischen Stellantrieb. Unabhängig davon, welche Verstellbewegung von der Verstellspindel ausgeführt wird, kann nach dem Erreichen einer der beiden Endstellungen dieser Verstellbewegung das direkt auf der Verstellspindel angeordnete Abtriebsrad noch bis zum Auslaufen des Elektromotors weiterdrehen. Dabei erfolgt durch dieses weiterdrehen eine Verschiebung des Abtriebsrades in der Achsrichtung der Verstellspindel, wodurch die Federanordnung gespannt und das erwünschte, gedämpfte Stillsetzen des Antriebes erreicht wird. Es hat sich gezeigt, daß ein solcher Stellantrieb wieder sicher aus der jeweils erreichten Endstellung des Abtriebsrades angefahren werden kann.

Durch die Unterteilung des Gehäuses des Stellantriebes in einen den eigentlichen Antrieb und einen die Lagerung der Verstellspindel enthaltenden ersten und zweiten Gehäuseteil wird die Herstellung von Stellantrieben für die unterschiedlichen Verstellbewegungen wesentlich erleichtert. Je nach Art der erfor derlichen Verstellbewegung braucht nur ein die entsprechende Lagerung der Verstellspindel aufweisendes zweites Gehäuseteil mit dem ersten Gehäuseteil verbunden zu werden.

Eine spezielle Ausbildung des Stellantriebes als Schwenkantrieb ist im Anspruch 3 und eine Ausbildung als Schubantrieb im Anspruch 4 beschrieben.

Bei einer Ausgestaltung des Stellantriebes gemäß den Merkmalen des Anspruchs 5 ergibt sich eine besonders kompakte Bauweise. Durch die Anordnung der gehäusefesten Anschlagränder für die Stützringe am ersten und zweiten Gehäuseteil ergeben sich wesentliche Erleichterungen beim Zusammenbau des Stellantriebs.

Eine Integration der zur Begrenzung der Verstellbewegung der Verstellspindel und damit auch des von dieser betätigten Verstellgliedes notwendigen Anschläge in den Stellantrieb erübrigt entsprechende Anschläge an dem Verstellglied selbst.

Das Abschalten des Stellantriebes oder die Anzeige der erreichten Position des Verstellgliedes kann mit den im Anspruch 11 beschriebenen Merkmalen erreicht werden.

Eine sehr kompakte Bauweise des Stellantriebes und ein geräuscharmer Lauf wird mit einer Ausgestaltung gemäß den Merkmalen des Anspruches 12 erreicht.

Anhand in der Zeichnung dargestellter Ausführungsbeispiele wird der Anmeldungsgegenstand nachfolgend näher beschrieben. Es zeigt:

FIG 1 einen als Schwenkantrieb ausgebildeten Stellantrieb;

FIG 2 eine Draufsicht der mit einem Verstellglied verbindbaren Flanschseite des Stellantriebes nach FIG 1;

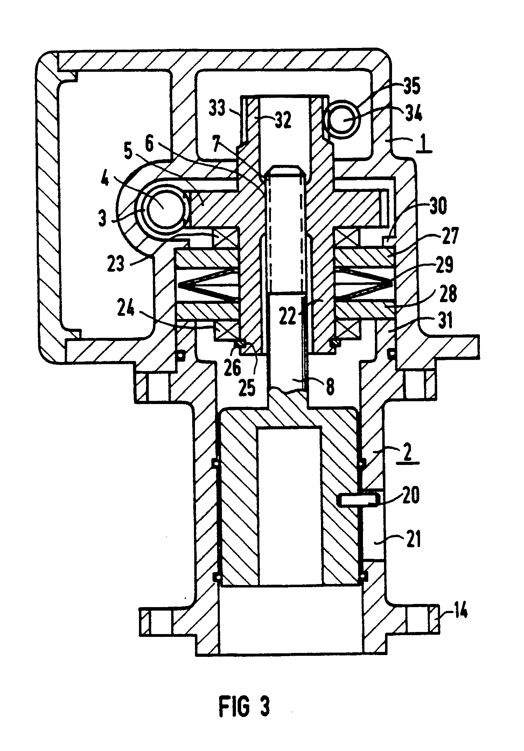

FIG 3 einen als Schubantrieb ausgebildeten Stellantrieb. Mit 1 ist ein erstes und mit 2 ein zweites Gehäuseteil bezeichnet, die zusammen das Gehäuse des Stellantriebes bilden. Im ersten Gehäuseteil 1 ist ein von einem in der Zeichnung nicht dargestellten Elektromotor angetriebene, mit einer Schnecke 3 versehene Schneckenwelle 4 drehbar, jedoch axial unbeweglich angeordnet. Die Schnecke 3 treibt ein Schneckenrad 5 an, welches mit einem Innengewinde 6 versehen und mit demselben auf ein entsprechendes Außengewinde 7 einer Verstellspindel 8 aufgeschraubt ist. Die Verstellspindel ist mittels zweier beidseitig zu einem an der Verstellspindel 8 angeformten Ringbund 9 angeordneter Axiallager 10 drehbeweglich gelagert. Die beiden Axiallager 10 sind ihrerseits mittels eines Auflagerandes 11 und eines Sprengringes 12 in axialer Richtung an dem zweiten Gehäuseteil 2 festgelegt. Somit kann die Verstellspindel 8 keine axiale Bewegung ausführen.

Die Drehbewegung der Verstellspindel 8 wird durch in einer topfförmigen Ausnehmung 13 eines am zweiten Gehäuseteil 2 ausgebildeten Anschlußflansches 14 angeordnete Anschlagblöcke 15, die mit einem an der Verstellspindel 8 vorgesehenen, radial vorstehenden Stift 16 zusammenwirken begrenzt. Die Anschlagblöcke 15 sind mittels Schrauben 17 in der Ausnehmung 13 befestigt. An den Anschlagblöcken 15 ausgebildete Langlöcher 18 erlauben eine kontinuierliche Verstellung der Anschlagblöcke 15. Werden über den gesamten Umfang der Ausnehmung 13 Gewindebohrungen 19 angebracht, so ist im Zusammenwirken mit den Langlöchern 18 eine Verstellung der Anschlagblökke 15 um beliebige Drehwinkel möglich.

Bei dem in FIG 3 dargestellten Stellantrieb ist die Verstellspindel 8 verschiebbar angeordnet. Die Führung der Verstellspindel 8 erfolgt in dem entsprechend ausgebildeten zweiten Gehäuseteil 2. Mit einem Anschlagstift 20 greift die Verstellspindel 8 in einen in der Wand des zweiten Gehäuseteils 2 vorgesehenen Langlochschlitz 21 ein. Die Verstellspindel 8 wird dadurch gegen Verdrehen gesichert und gleichzeitig wird die Schubbewegung durch die Länge des Langlochschlitzes 21 begrenzt.

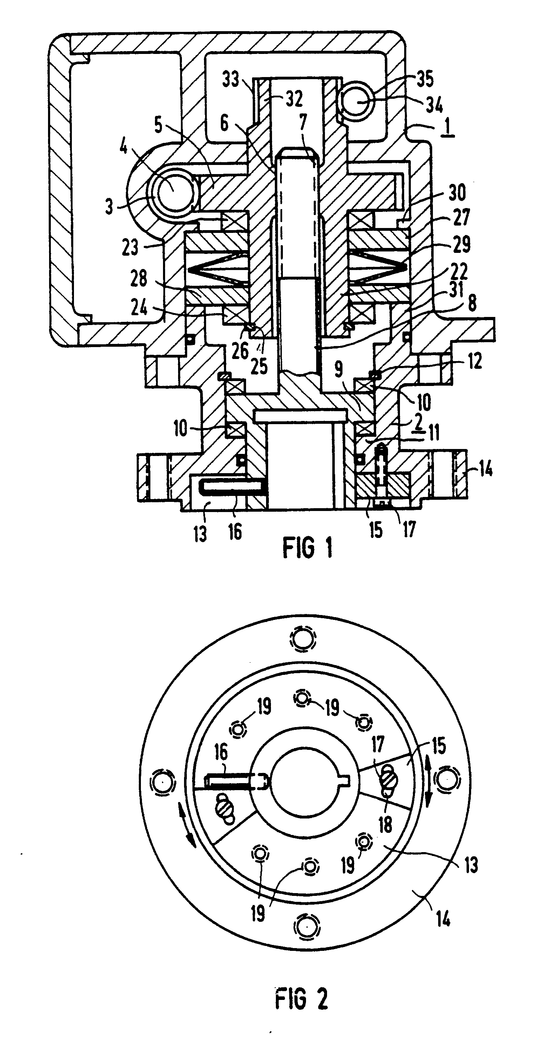

Wie der Vergleich der FIG 1 und 3 zeigt, weist der Stellantrieb bei einer Ausbildung als Schwenkantrieb und auch bei der Ausbildung als Schubantrieb die gleiche Antriebseinheit auf. Bei beiden Antriebsarten ist es notwendig, daß das Schneckenrad 5 beim Erreichen einer der Endstellungen des Verstellgliedes und dem damit verbundenen Stillstand der Verstellspindel 8 noch weiter drehen kann. Hierzu ist das Schneckenrad 5 besonders gelagert, wie nachfolgend beschrieben wird.

Auf dem Außenumfang eines an dem Schneckenrad 5 angeformten, hohlzylinderförmigen Ansatzes 22 sind in axialem Abstand zwei als Axiallager ausgebildete Stützlager 23 und 24 angeordnet. Das eine Stützlager 23 ist an der einen Seite des Schneckenrades 5 und das andere Stützlager 24 mittels eines in einer Ringnut 25 des Ansatzes 22 eingesetzten Halteringes 26 in axialer Richtung abgestützt. Zwischen den beiden Stützlagern 23 und 24 sind zwei Stützringe 27 und 28 auf den Ansatz 22 aufgesteckt, wobei zwischen den beiden Stützringen 27 und 28 eine aus Tellerfedern 29 bestehende Federanordnung eingefügt ist. Die Stützringe 27 und 28 liegen in ihrem radialen Innenbereich an diesen Stützlagern 23 und 24 an. Die Abstützung der Stützringe 27 und 28 in ihrem radialen Außenbereich erfolgt mittels eines am ersten Gehäuseteil 1 ausgebildeten Anschlagrandes 30 und durch einen am zweiten Gehäuseteil 2 vorgesehenen Zentrierbund 31. Die Lage des Anschlagrandes 30 und die axiale Länge des Zentrierbundes 31 sind so gewählt, daß der Abstand zwischen diesen beiden Teilen dem axialen Abstand zwischen den beiden Stützlagern 23 und 24 entspricht.

Bei einem Verstellvorgang wird die Verstellspindel 8 über das vom Elektromotor über die Schnecke 3 angetriebene Schneckenrad bewegt. Ist der Stellantrieb gemäß FIG 1 als Schwenkantrieb ausgebildet, so wird die Verstellspindel 8 durch das Schneckenrad 5 verdreht. Bei einer Ausbildung als Schubantrieb (FIG 3) kann die Verstellspindel 8 keine Drehbewegung ausführen, so daß die Drehbewegung des Schneckenrades 5 über das Innen- und Außengewinde 6 und 7 in eine Schubbewegung der Verstellspindel 8 umgesetzt wird.

Hat bei einem Verstellvorgang die Verstellspindel 8 dann eine ihrer Endstellungen erreicht, so kann der Elektromotor aufgrund der vorhandenen Schwungmassen nicht abrupt stillgesetzt werden. Infolge des nicht zu vermeidenden Nachlaufes wird das Schneckenrad 5 noch weiter gedreht. Dabei schraubt es sich am Außengewinde 7 der Verstellspindel 8 je nach Drehrichtung nach oben oder unten. Damit das Schneckenrad 5 eine solche axiale Bewegung gegenüber der lagefesten Schnecke 3 ausführen kann, ist seine Außenverzahnung als Schrägverzahnung und die Schnecke entsprechend als Zylinder- oder Globoidschnecke ausgebildet.

Bei einer nach unten gerichteten Bewegung des Schneckenrades 5 wird über das eine Stützlager 23 der eine Stützring 27 gegen die Tellerfeder 29 gepreßt, so daß diese zusammengedrückt werden. Der eine Stützring 27 wird dabei von dem Anschlagrand 30 abgehoben und bewegt sich ebenfalls abwärts. Der andere Stützring 28 ist an dem Zentrierbund 31 nach unten fest abgestützt und nimmt die von den Tellerfedern 29 ausgeübte Anpreßkraft auf. Das andere Stützlager 24 wandert mit dem Schneckenrad 5 nach unten und hebt von dem anderen Stützring 28 ab.

Ist die Bewegung des Schneckenrades 5 bei der anderen Drehrichtung nach oben gerichtet, so wird über das andere Stützlager 24 der andere Stützring 28 gegen die Tellerfedern 29 gepreßt. Die Abstützung gegen die Federkraft erfolgt in diesem Falle über den einen Stützring 27 an dem Anschlagrand 30 des ersten Gehäuseteils 1. Das eine Stützlager 23 kann dabei mit dem Schneckenrad 5 nach oben wandern und von dem einen Stütz ring 27 abheben. Damit ist für beide Verstellrichtungen ein abgefederter Auslauf des Antriebes möglich. Die Schneckenwelle 4 der Schnecke 3 kann bei diesem Antrieb in axialer Richtung starr, d.h. unbeweglich angeordnet werden.

An dem Schneckenrad 5 ist auf der dem hohlzylindrischen Ansatz 22 gegenüberliegenden Seite noch ein Hohlzapfen 32 angeformt. Am Außenumfang dieses Hohlzapfens 32 ist eine Gewindeverzahnung 33 vorgesehen, über die ein auf einer Schaltwelle 34 angeordnetes Getrieberad 35 angetrieben wird. Die Schaltwelle 34 kann mit entsprechenden Nockenscheiben bestückt werden, die zur Betätigung von elektrischen Schaltern dienen. Über diese Schalter kann sowohl der den Stellantrieb antreibende Elektromotor abgeschaltet als auch eine Stellungsanzeige für das über den Stellantrieb betätigte Verstellglied gegeben werden.

Die Verdrehung der Schaltwelle 34 erfolgt einerseits durch die Drehbewegung des Schneckenrades 5, wobei die Schaltwelle 34 entsprechend dem Übersetzungsverhältnis zwischen der Gewindeverzahnung 33 und dem Getrieberad 35 verdreht wird. Andererseits wird die von dem Schneckenrad 5 ausgeführte axiale Bewegung direkt in eine in gleicher Richtung erfolgende Verdrehbewegung der Schaltwelle 34 umgesetzt. Somit wird gerade am Ende eines Verstellvorganges ein großer Verdrehwinkel der Schaltwelle 34 erreicht, wodurch ein sicheres Betätigen der mit der Schaltwelle 34 gekuppelten elektrischen Schalter gewährleistet ist.

## Ansprüche

1. Elektromotorischer Stellantrieb mit Selbsthemmung oder Selbsthaltung, der eine mit einem Verstellglied kuppelbare und in ihrer Verstellbewegung in beiden Richtungen durch Anschläge (15,16 bzw .20,21) begrenzte Verstellspindel (8) aufweist, die über ein Getriebe (3,5) von einem Elektromotor antreibbar ist, wobei das Abtriebsrad (5) des Getriebes als Spindelmutter dient, die mittels ihres Innengewindes (6) auf die mit einem entsprechenden Außengewinde (7) versehene Verstellspindel (8) aufgeschraubt ist, welches Abtriebsrad (5) ferner eine Außenverzahnung aufweist, die gegenüber dem antreibenden Getrierad (3) des Getriebes eine axiale Verschiebung des Abtriebsrades (5) in der Achsrichtung der Verstellspindel (8) zuläßt, wobei das Abtriebsrad (5) in dieser Achsrichtung federnd im Gehäuse (1,2) des Stellantriebes abgestützt ist.

2. Stellantrieb nach Anspruch 1, **dadurch gekennzeichnet**, daß das Gehäuse des Stellantriebes aus einem das Getriebe (3,5) enthaltenden ersten und einem die entsprechend gelagerte Verstellspindel (8) enthaltenden, mit dem ersten Gehäuseteil (1) verbindbaren zweiten Gehäuseteil (2) besteht.

3. Stellantrieb nach Anspruch 1 oder 2, **dadurch gekennzeichnet**, daß die Verstellspindel (8) mittels axial am Gehäuse (2) fixierter Axiallager (10) drehbeweglich gelagert und ihre Drehbewegung in beiden Richtungen durch Anschläge (15,16) begrenzbar ist.

4. Stellantrieb nach Anspruch 1 oder 2, **dadurch gekennzeichnet**, daß die Verstellspindel (8) axial verschiebbar im Gehäuse (2) geführt und ihre Schubbewegung in beiden Richtungen durch Anschläge (20,21) begrenzt ist.

5. Stellantrieb nach Anspruch 1 oder 2 und 3 oder 4, **dadurch gekennzeichnet**, daß zwischen zwei am Außenumfang eines sich in Achsrichtung der Verstellspindel (8) erstreckenden hohlzylinderförmigen Ansatzes (22) des Abtriebsrades (5) aufsteckbaren Stützringen (27,28) eine in axialer Richtung wirkende Federanordnung (29) vorgesehen ist, daß ferner diese Stützringe (27,28) mit ihren der Federanordnung abgewandten Außenseiten in ihrem radial innenliegenden Bereich an zwei in axialem Abstand auf dem Ansatz (22) angeordneten und an diesem in axialer Richtung fixierten Stützlagern (23,24) und in ihrem radial außenliegenden Bereich an zwei in gleichem Axialabstand wie die Stützlager angeordneten gehäusefesten Anschlagrändern (30,31) abgestützt sind.

6. Stellantrieb nach Anspruch 2 und 5, **dadurch gekennzeichnet**, daß der eine gehäusefeste Anschlagrand (30) am ersten Gehäuseteil (1) ausgebildet und der andere Anschlagrand von einem in das erste Gehäuseteil (1) eingreifenden Zentrierbund (31) des zweiten Gehäuseteils (2) gebildet ist.

7. Stellantrieb nach Anspruch 2, **dadurch gekennzeichnet**, daß der zweite Gehäuseteil (2) auf seiner dem ersten Gehäuseteil (1) gegenüberliegenden Seite mit einem Anschlußflansch (14) für das Verstellglied versehen ist.

8. Stellantrieb nach Anspruch 3 und 7, **dadurch gekennzeichnet**, daß der Anschlußflansch eine topfförmige Ausnehmung (13) aufweist, in der die Bewegung der Verstellspindel (8) begrenzende Anschläge (15) anbringbar sind.

9. Stellantrieb nach Anspruch 3 und 8, **dadurch gekennzeichnet**, daß zur Begrenzung der Drehbewegung an der Verstellspindel (8) ein radial vorragender Stift (16) und in der Ausnehmung (13) des Anschlußflansches (14) in die Bewegungsbahn des Stiftes (16) ragende Anschlagblöcke (15) in entsprechendem Umfangsabstand angeordnet sind.

10. Stellantrieb nach Anspruch 9, **dadurch gekennzeichnet**, daß die Anschlagblöcke (15) in Umfangsrichtung verstellbar angeordnet sind.

11. Stellantrieb nach einem oder mehreren der vorhergehenden Ansprüche, **dadurch gekennzeichnet**, daß auf der der Abtriebsseite des Stellantriebes gegenüberliegenden Seite des Abtriebsrades (5) ein Hohlzapfen (32) vorgesehen ist, der an seinem Außenumfang eine mit einem auf einer einen elektrischen Schalter betätigenden Schaltwelle (34) angeordneten Getrierad (35) zusammenwirkende Gewindeverzahnung (33) aufweist.

12. Stellantrieb nach einem oder mehreren der vorhergehenden Ansprüche, **dadurch gekennzeichnet**, daß das Getriebe ein aus einer Schnekke (3) und einem Schneckenrad (5) bestehendes, selbsthemmendes Schneckengetriebe ist, wobei die Außenverzahnung des Schneckenrades (5) als Schrägverzahnung und die Schnecke (3) als Zylinder- oder Globoidschnecke ausgebildet ist.

FIG 1

FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-2 905 012 (LOHR) <br> * Spalte 1, Zeile 63 - Spalte 3, Zeile 58; Figuren 1,2 * | 1,4 | F 16 H 25/20 <br> F 16 K 31/04 |
| A | --- | 5 | |
| Y | GB-A-2 112 495 (SUNDSTRAND) <br> * Seite 2, Zeile 47 - Seite 3, Zeile 13; Figur 1 * | 1,4 | |
| A | --- | 5 | |
| A | US-A-4 509 382 (COLAUTTI) <br> * Spalte 4, Zeile 4 - Spalte 5, Zeile 22; Figur 3 * | 1,4 | |
| A | --- <br> DE-A-3 615 285 (SULZER) <br> * Spalte 2, Zeile 48 - Spalte 4, Zeile 32; Figuren 1-3 * | 1,2,4,5 ,11 | |
| E | --- <br> EP-A-0 305 762 (SIEMENS) <br> * Spalte 1, Zeile 43 - Spalte 2, Zeile 36; Figur 1 * <br> ----- | 1,2,4, 12 | |

**RECHERCHIERTE SACHGEBIETE (Int. Cl.5)**

F 16 H
F 16 K

Der vorliegende Recherchenbericht wurde für alle Patentansprüche erstellt

| Recherchenort | Abschlußdatum der Recherche | Prüfer |
|---|---|---|
| DEN HAAG | 25-09-1989 | FLODSTROEM J.B. |